# EUROPEAN PATENT SPECIFICATION

(11) **EP 3 486 453 B1**
(45) Date of publication and mention of the grant of the patent: **05.08.2020**
(21) Application number: 18205849.5
(22) Date of filing: 13.11.2018
(51) Int. Cl.: F02B 41/04, F02B 75/04, F01B 9/04, F16H 1/46, F16H 35/00

(54) **INTERNAL COMBUSTION ENGINE WITH INFINITELY VARIABLE COMPRESSION RATIO MECHANISM**
VERBRENNUNGSMOTOR MIT STUFENLOS REGELBAREM VERDICHTUNGSVERHÄLTNIS-MECHANISMUS
MOTEUR À COMBUSTION INTERNE MUNI D'UN MÉCANISME À TAUX DE COMPRESSION VARIABLE INFINIMENT

(30) Priority: 21.11.2017 US 201715819084
(43) Date of publication of application: 22.05.2019
(73) Proprietor: Sokalski, Mark Albert, Carnegie; Pennsylvania 15106 (US)
(72) Inventor: Sokalski, Mark Albert, Carnegie; Pennsylvania 15106 (US)
(74) Representative: Loo, Chi Ching

(56) References cited:
- EP-A1- 2 025 893
- WO-A1-96/27079
- CN-U- 204 827 655
- DE-A1-102011 018 166
- DE-A1-102013 003 682
- US-A1- 2015 247 452

## Description

### FIELD OF THE INVENTION

The present invention relates generally to alternative designs for an internal combustion engine. More specifically, the present invention is an internal combustion mechanism capable of varying the top dead center position of a piston, thus varying the overall compression ratio of the internal combustion engine. The compression ratio may be varied anytime and almost instantaneously, thus allowing for each stroke within a cycle to be customized for increased performance and higher efficiency. The present invention may be implemented in a two-cycle or four-cycle internal combustion engine. Additionally, the present invention also provides long power and exhaust strokes and short intake and compression strokes for implementation into four-cycle internal combustion engine.

### BACKGROUND OF THE INVENTION

CN204827655U discloses an internal combustion engine having a conventional piston and conventional connecting rod, without the conventional crankshaft, as the crankshaft is replaced by adjustable rotation sun gears, planet gear carriers, planetary gears, a counter-balanced planetary gear assembly with offsetting crankpin, ring gears, a straight main power output shaft, and an output drive gear train. The present invention applies to all types of internal combustion reciprocating piston engines as the present invention allows for varying the piston travel upward stop position. Additionally, the present invention allows for two different piston stroke travel lengths to be implement within a one complete four-cycle operation.

Otto, Diesel, Joule-Brayton, Wankel, Atkinson, Moteki, and others, have created different apparatus and methods for internal combustion engines. The present invention (known as the SOWDA engine) combine the positive benefits of the above-mentioned inventions into one unique all-encompassing design. The benefits of four-stoke (Otto), constant pressure compression ignition (Diesel), infinitely variable compression ratio (Moteki), a long power stroke and a short compression stroke (Atkinson), and a balanced centrifugal rotating mechanism (Wankel) makes the present invention extremely unique and highly energy efficient. The present invention provides an internal combustion engine with the Atkinson's long and short piston stroke length motions, the variable compression ratio concept similar to Moteki, the intake air flow throttling control of the Otto cycle, and the constant ignition pressure of the Diesel cycle.

The present invention provides fixed long power and exhaust strokes with fixed short intake and compression strokes. In practicality, the power and exhaust strokes may be set 40% to 50% longer than the intake and compression strokes.

Energy/fuel consumption for lawn-tractors, golf carts, chain saws, automobiles, trucks, buses, airplanes, power generators, etc. has become more and more critical to the economic stability and environmental stability of the earth. Presently, no apparatus or method provides the intake air-flow throttling control of the Otto four-stroke cycle and the constant pressure ignition of the Diesel four-stroke cycle, while at the same time, applying the Atkinson long and short stroke cycles and packaged into a small balanced centrifugal rotating mechanism easily adapted to existing internal combustion technology at a reasonable expense. Internal engines equipped with the present invention can operate on almost any fuel and perform at extremely high efficiencies with or without a turbo charger or super-charger. As a result, the present invention can be applied to all reciprocating internal combustion engines using virtually any gas, liquid, or solid fuel, or any combination or blend, thereof.

### BRIEF DESCRIPTION OF THE DRAWINGS

FIG. **1** is a perspective view of the present invention.
FIG. **2** is a perspective exploded view of the present invention.
FIG. **3** is a front exploded view of the present invention.
FIG. **4** is a side view of the a partially internal view of the present invention.
FIG. **5** is a perspective view of the present invention integrated into an inline four-cylinder internal combustion engine.

### DETAIL DESCRIPTIONS OF THE INVENTION

All illustrations of the drawings are for the purpose of describing selected versions of the present invention and are not intended to limit the scope of the present invention.

The present invention generally relates to alternative designs for an internal combustion engine. More specifically, the present invention is a balanced and rotating compact mechanism adapted to a conventional reciprocating internal combustion engine. The present invention combines infinitely adjustable variable compression ratio with long power and exhaust strokes and short intake and compression strokes (Atkinson), so as to obtain an internal combustion engine with variable intake air flow (Otto) and still maintain a constant pressure ignition (Diesel).

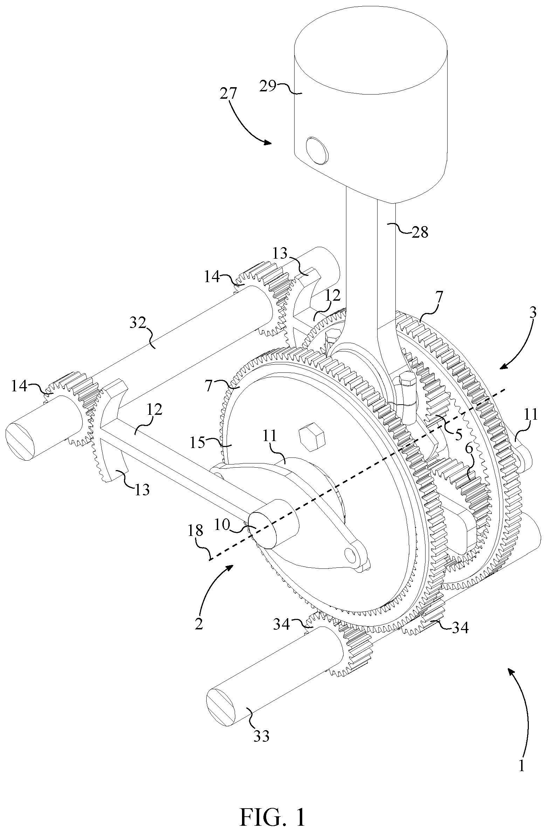

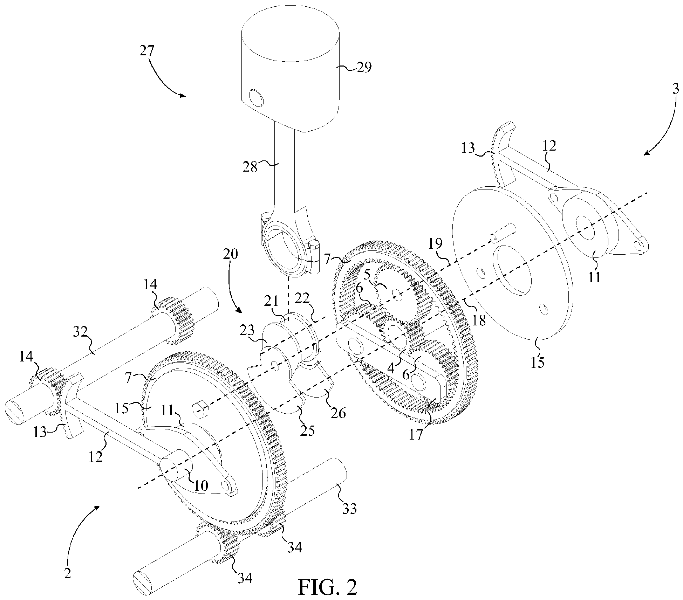

The present invention is an internal combustion (IC) mechanism integrated into an internal combustion engine. For simplicity purposes, the present invention is disclosed as being integrated into an internal combustion engine with a single cylinder. At the core, referring to FIG. **1** and FIG. **2****,** the present invention comprises a piston-and-connecting rod assembly **27,** a gear-pin assembly **20,** and a mirror-image planetary-gear assembly **1.** Similar to conventional designs, the piston-and-connecting rod assembly **27** is the linearly reciprocating component which transfers force from an expanding gas to the mirror-image planetary-gear assembly **1.** The mirror-image planetary-gear assembly **1** in conjunction with the gear-pin assembly **20** act as a crank mechanism to convert the reciprocating motion of the piston-and-connecting rod assembly **27** into rotation motion to be used at the output of the internal combustion engine. Additionally, the mirror-image planetary-gear assembly **1** and the gear-pin assembly **20** vary and control the compression ratio of the internal combustion engine.

The mirror-image planetary-gear assembly **1** makes up the body of the present invention and further comprises a first planetary-gear assembly **2** and a second planetary-gear assembly **3.** The first planetary-gear assembly **2** and the second planetary-gear assembly **3** are each an epicyclic gear system comprising a sun gear **4,** a primary planet gear **5,** a plurality of secondary planet gears **6,** and a ring gear **7.** Referring to FIG. **1****,** the first planetary-gear assembly **2** and the second planetary-gear assembly **3** are mounted offset from each other to symmetrically support the gear-pin assembly **20** from opposing sides. More specifically, the sun gear **4** from the first planetary-gear assembly **2** and the sun gear **4** from the second planetary-gear assembly **3** are concentrically positioned with each other about a main rotation axis **18.** As such, the first planetary-gear assembly **2** and the second planetary-gear assembly **3** are mounted and centered about the main rotation axis **18.** Similar to traditional designs, the sun gear **4** is a relatively small spur gear which acts as the center support member for the primary planet gear **5,** the plurality of secondary planet gears **6,** and the ring gear **7.** The sun gear **4** acts a structural member in order to support the primary planet gear **5,** the plurality of secondary planet gears **6,** and the ring gear **7.** Additionally, in general, when the sun gear **4** is rotated, the sun gear **4** raises or lowers the top dead center (TDC) height of the piston-and-connecting rod assembly **27,** thus changing the compression ratio.

The primary planet gear **5** and each of the plurality of secondary planet gears **6** are radially distributed about the sun gear **4** and are each a spur gear that is mechanically engaged to the sun gear **4.** Similar to traditional designs, the primary planet gear **5** and each of the plurality of secondary planet gears **6** revolve about the sun gear **4,** i.e. the main rotation axis **18.** The primary planet gear **5** of the first planetary-gear assembly **2** and the primary planet gear **5** of the second planetary-gear assembly **3** support the gear-pin assembly **20** to translates the linear motion of the piston-and-connecting rod assembly **27** into rotational motion about the main rotation axis **18.** The plurality of secondary planet gears **6** assists in the transmission of torsional forces, counter-balances the primary planet gear **5,** and support the ring gear **7** such that the ring gear **7** can symmetrically rotate about the main rotation axis **18.** The ring gear **7** is mounted coaxial with the sun gear **4** and mechanically engages with the primary planet gear **5** and each of the plurality of secondary planet gears **6.** Thus, the ring gear **7** encompasses the sun gear **4,** the primary planet gear **5,** and the plurality of secondary planet gears **6.** When the primary planet gear **5** rotates about the sun gear **4,** the ring gear **7** is rotated by the primary planet gear **5** and the plurality of secondary planet gears **6** about the main rotation axis **18** because the sun gear **4** is held fixed. The sun gear **4** only rotates slightly when varying the compression ratio.

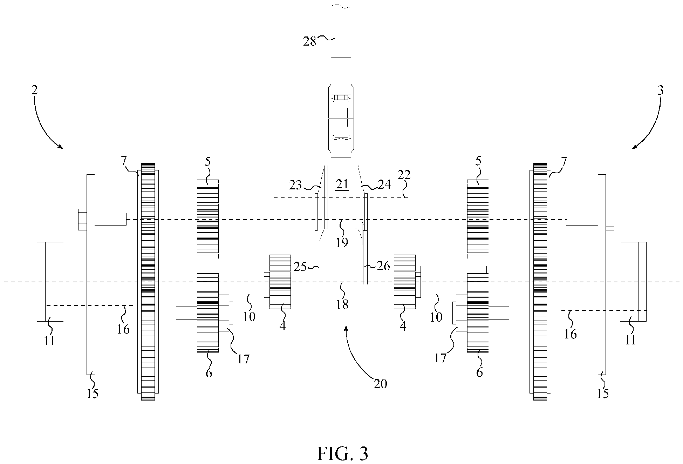

The gear-pin assembly **20** is an eccentric journal which acts as the crankpin element to mechanically couple the piston-and-connecting rod assembly **27** to the mirror-image planetary-gear assembly **1.** Referring to FIG. **3****,** the primary planet gear **5** from the first planetary-gear assembly **2** and the primary planet gear **5** from the second planetary-gear assembly **3** are concentrically positioned with each other along a shared rotation axis **19** and support the gear-pin assembly **20.** More specifically, the gear-pin assembly **20** is torsionally and eccentrically connected in between the primary planet gear **5** from the first planetary-gear assembly **2** and the primary planet gear **5** from the second planetary-gear assembly **3.** The gear pin assembly **20** forces the first planetary-gear assembly **2** and the second planetary-gear assembly **3** to radially translate at the same rate. It is important to note that the gear-pin assembly **20** is eccentric in respect to the shared rotation axis **19.** This configuration is key in varying the TDC height and, therefore, varying the compression ratio. The piston-and-connecting rod assembly **27** applies a linear force onto the gear-pin assembly **20** through traditional combustion-based methods, or other similar methods. In general, the piston-and-connecting rod assembly **27** is mechanically coupled to the gear-pin assembly **20** in order to impart motion onto the mirror-image planetary-gear assembly **1.**

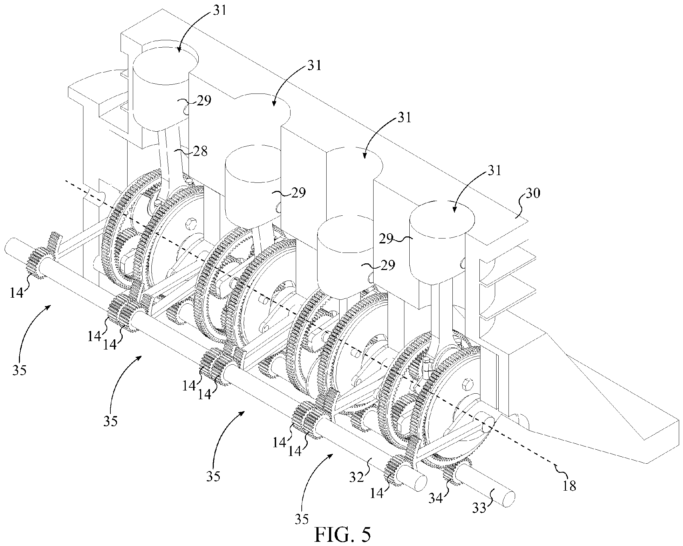

Referring to FIG. **5****,** relative to the internal combustion engine, the mirror-image planetary-gear assembly **1,** the gear-pin assembly **20,** and the piston-and-connecting rod assembly **27** are rotatably mounted within an engine block **30** of the internal combustion engine. Additionally, the piston-and-connecting rod assembly **27** is slidably positioned within a cylinder **31** of the engine block **30** to create a combustion chamber. The combustion chamber size directly dictates the compression ratio of the internal combustion engine.

The overall method of the present invention begins with the expansion of highpressure and high-temperature gases produced by combustion in the combustion chamber. The overall method of the present invention is disclosed in relation to both the first planetary-gear assembly **2** and the second planetary-gear assembly **3;** in particular, the subcomponents of the first planetary-gear assembly **2** move identical with the same subcomponents of the second planetary-gear assembly **3.** This expanding gas applies a force onto the piston-and-connecting rod assembly **27,** forcing the piston-and-connecting rod assembly **27** to translate towards the main rotation axis **18,** this direction will be referenced as downwards, within the cylinder **31.** In turn, the piston-and-connecting rod assembly **27** applies a force onto the gear-pin assembly **20.** Because the gear-pin assembly **20** is connected to the primary planet gear **5,** the primary planet gear **5** begins to rotate about the shared rotation axis **19** and the main rotation axis **18.** As the primary planet gear **5** travels about the main rotation axis **18,** the piston-and-connecting rod assembly **27** repeatedly reverses directions and, resultantly, travels in a reciprocating motion within the cylinder **31,** similar to conventional designs. Repeated combustion within the cylinder **31** at specific increments continuously applies energy into the mirror-image planetary-gear assembly **1** through the aforementioned process. This process mimics a crankshaft mechanism found in traditional internal combustion engines.

Due to the characteristics of epicyclical gearing, the primary planet gear **5** and the plurality of secondary planet gears **6** rotate about the main rotation axis **18** at the same rate. This rotation forces the ring gear **7** to rotate about the main rotation axis **18** as the sun gear **4** is kept fixed. The rotational speed of the ring gear **7** is different relative to the rotational speed of primary planet gear **5** due to differences in size and teeth number. The rotational motion/energy of the ring gear **7** is then transferred to an output power shaft **33.** The output power shaft **33** receives rotational energy from the mirror-image planetary-gear assembly **1** and transmits said rotational energy out of the internal combustion engine. To transmit the output power, the output power shaft **33** is positioned parallel and offset to the main rotation axis **18.** Additionally, output power shaft **33** is torsionally coupled to the ring gear **7.** As described above, this process occurs for both the first planetary-gear assembly **2** and the second planetary-gear assembly **3.** In particular, the output power shaft **33** is torsionally coupled to the ring gear **7** from the first planetary-gear assembly **2** and the ring gear **7** from the second planetary-gear assembly **3.**

In order to vary the compression chamber volume, the TDC height of the piston-and-connecting rod assembly **27** is raised or lowered. This height change is achieved by uniformly rotating both the sun gear **4** of the first planetary-gear assembly **2** and the sun gear **4** of the second planetary-gear assembly **3.** The following description of movement is disclosed in relation to both the first planetary-gear assembly **2** and the second planetary-gear assembly **3.** To raise or lower the TDC height, the sun gear **4** is partially rotated. In the preferred embodiment of the present invention, the gearing and sizing between the primary planet gear **5,** the plurality of secondary planet gears **6,** the sun gear **4,** and the ring gear **7** may be altered to achieve a number of different cycles, different TDC heights, different chamber sizes, and more.

The gear-pin assembly **20** is eccentrically positioned relative to the shared rotation axis **19,** the TDC height can be modified through the rotation of the primary planet gear **5,** i.e. partial rotation of the sun gear **4.** In other words, the primary planet gear **5** travels along a circular path around the sun gear **4** while the gear-pin assembly **20** travels along a circular path wrapped around the sun gear **4.** As a result, the gear-pin assembly **20** always returns to the same orientation at TDC height as long as the sun gear **4** has not moved; wherein the TDC height is defined by the point of travel at which location the piston-and-connecting rod assembly **27** stops movement in the upward travel direction to begin the downward stroke; and, wherein a single cycle is defined by a single full 360-degree rotation of the primary planet gear **5** about the main rotation axis **18.** Because of the characteristics of epicyclical gearing, partially rotating the sun gear **4** rotates the relative position of primary planet gear **5** and each of the plurality secondary planet gears **6.** The partial rotation of sun gear **4** alters the orientation of the primary planet gear **5** and the orientation of the gear-pin assembly **20** at TDC height. Thus, a partial rotation of the sun gear **4** raises or lowers the TDC height for the cycle and in turn raising or lowering the compression ratio.

Referring to FIG. **2****,** the first planetary-gear assembly **2** and the second planetary-gear assembly **3** each further comprise a ratio-adjustment mounting shaft **10** and a bearing **11.** The ratio-adjustment mounting shaft **10** controls the radial displacement and rotation of the sun gear **4,** thus varying the relative position of the primary planet gear **5** and, therefore, changes the compression ratio. The ratio-adjustment shaft is positioned adjacent to the sun gear **4,** opposite the gear-pin assembly **20.** Additionally, the ratio-adjustment mounting shaft **10** is torsionally and axially connected to the sun gear **4** such that any rotational movement of the ratio-adjustment mounting shaft **10** will translate to an equivalent rotational movement of the sun gear **4.** The bearing **11** rotatably mounts the ratio-adjustment mounting shaft **10** within the engine block **30.** More specifically, the mirror-image planetary-gear assembly **1,** the gear-pin assembly **20,** and the piston-and-connecting rod assembly **27** are positioned within the engine block **30.** The bearing **11** is adjacently connected within the engine block **30,** adjacent to the sun gear **4.** The ratio-adjustment mounting shaft **10** is attached within the bearing **11** such that the ratio-adjustment mounting shaft **10** is rotatably mounted to the engine block **30** with the bearing **11.** This configuration is identical to the first planetary-gear assembly **2** and the second planetary-gear assembly **3.** In alternative embodiments, different means and mechanisms may be used to mount the mirror-image planetary-gear assembly **1** within the engine block **30.**

The ratio-adjustment mounting shaft **10** may be controlled through a variety of means. In the preferred embodiment of the present invention, the ratio-adjustment mounting shaft **10** is controlled by the ratio-control shaft **32.** More specifically, the ratio-control shaft **32** is mechanically coupled to the ratio-adjustment mounting shaft **10** of the first planetary-gear assembly **2** and the ratio-adjustment mounting shaft **10** of the second planetary-gear assembly **3.** For this coupling, the first planetary-gear assembly **2** and the second planetary-gear assembly **3** each further comprise a control arm **12,** an arc gear **13,** and a drive-adjustment gear **14** to mechanically couple the ratio-control shaft **32** to the ratio-adjustment mounting shaft **10.** The ratio-control shaft **32** is rotatably mounted within the engine block **30,** in particular the ratio-control shaft **32** is mounted parallel and offset to the ratio-adjustment mounting shaft **10.** The control arm **12** is an elongated plate or rod that is terminally and perpendicularly connected to the ratio-adjustment mounting shaft **10.** The arc gear **13** is a semi-annular gear that is terminally connected to the control arm **12,** opposite to the ratio-adjustment mounting shaft **10.** The drive-adjustment gear **14** is concentrically connected about the ratio-control shaft **32** and is mechanically engaged with the drive-adjustment gear **14.** Resultantly, rotational motion of the ratio-control shaft **32** raises or lowers one end of the control arm **12** through the mechanical engaged between the arc gear **13** and the drive-adjustment gear **14.** This engagement rotates the ratio-adjustment mounting shaft **10** and the sun gear **4,** and resultantly changes the compression ratio. In relation to the overall system, the ratio-control shaft **32** is mechanically coupled to the ratio-adjustment mounting shaft **10** of the first planetary-gear assembly **2** and the ratio-adjustment mounting shaft **10** of the second planetary-gear assembly **3.**

The ratio-control shaft **32** is managed by a variable compression-ratio drive unit. The variable compression-ratio drive unit is preferably a conventional pneumatic-to-rotational actuator. The variable compression-ratio drive unit senses the manifold or intake pressure as well as other engine parameters and translates the ratio-control shaft **32** accordingly to a predefined/specified setting. In particular, the variable compression ratio-drive unit is torsionally coupled to the ratio-control shaft **32** to directly control the angular displacement of the ratio-control shaft **32.** A variety of alternative methods may be used to rotate the ratio-control shaft **32** and control the compression ratio. In an alternative embodiment of the present invention, an electric servo-motor or hydraulic actuator is torsionally connected to the ratio-control shaft **32.**

Referring to FIG. **3****,** the gear-pin assembly **20** comprises a bearing journal shaft **21,** a first mounting foot **23,** and a second mounting foot **24.** The first mounting foot **23** and the second mounting foot **24** connect the bearing journal shaft **21** to the primary planet gear **5** of the first planetary-gear assembly **2** and to the primary planet gear **5** of the second planetary-gear assembly **3** at an offset distance, i.e. eccentrically. More specifically, a central axis **22** of the bearing journal shaft **21** is positioned parallel and offset to the shared rotation axis **19.** The first mounting foot **23** and the second mounting foot **24** are structural elements designed to support the bearing journal shaft **21.** As such, the first mounting foot **23** and the second mounting foot **24** are positioned opposite to each other, across the bearing journal shaft **21.** More specifically, the first mounting foot **23** is connected in between the bearing journal shaft **21** and the primary planet gear **5** of the first planetary-gear assembly **2.** Similarly, the second mounting foot **24** is connected in between the bearing journal shaft **21** and the primary planet gear **5** of the second planetary-gear assembly **3.** This provides symmetrical support to the bearing journal shaft **21.**

The piston-and-connecting rod assembly **27** rotates around the bearing journal shaft **21** and about the central axis **22,** wherein the bearing journal shaft **21** is eccentrically mounted relative to the shared rotation axis **19.** The TDC height can be varied by changing the relative rotational position of the primary planet gear **5,** i.e. partial rotation of the sun gear **4.** This aspect is described in relation to both the first planetary-gear assembly **2** and the second planetary-gear assembly **3.** The primary planet gear **5** travels along a circular path around the sun gear **4** while the bearing journal shaft **21** of the gear-pin assembly **20** travels along a different path around the sun gear **4.** As a result, the gear-pin assembly **20** always returns to the same orientation at TDC height as long as the sun gear **4** has not moved; but the relative offset of the bearing journal shaft **21** can be raised or lowered by rotating sun gear **4** a fixed amount and, therefore, changing the relative position of the primary planet gear **5,** changing the path of the of the bearing journal shaft **21** and, therefore, raising or lowering the TDC.

The present invention utilizes a multitude of methods in order to ensure that the mirror-image planetary-gear assembly **1** is adequately balanced during operations, thus decreasing vibration, decreasing energy loses, and increasing efficiency of the internal combustion engine. More specifically, the first planetary-gear assembly **2** and the second planetary-gear assembly **3** each further comprise an eccentric annular external-counterweight **15** and a counterweight coupling plate **17.** The eccentric annular external-counterweight **15** is a circular plate with a hole that is positioned off-center, thus positioning a majority of its weight one half of the circular plate. The eccentric annular external-counterweight **15** is positioned adjacent to the primary planet gear **5** and the plurality of secondary planet gears **6,** opposite the gear-pin assembly **20.** Additionally, the eccentric annular external-counterweight **15** is positioned around the ratio-adjustment mounting shaft **10,** thus allowing the eccentric annular external-counterweight **15** to rotate without engaging the ratio-adjustment mounting shaft **10.** The eccentric annular external-counterweight **15** is designed to rotate about the main rotation axis **18** with the primary planet gear **5** and the plurality of secondary planet gears **6** in order to counter balance the weight of the gear-pin assembly **20,** the piston-and-connecting rod assembly **27,** and any forces associated with the aforementioned components. As such, the eccentric annular external-counterweight **15** is rotatably mounted to the primary planet gear **5** and each of the plurality of secondary planet gears **6.** Additionally, a center of gravity **16** of the eccentric annular external-counterweight **15** and the shared rotation axis **19** are positioned opposite to each other about the ratio-adjustment mounting shaft **10.**

Referring to FIG. **2****,** the counterweight coupling plate **17** adds to the eccentric annular external-counterweight **15.** The counterweight coupling plate **17** is an elongated plate, preferably of a rectangular shape, that is attached to the plurality of secondary planet gears **6.** More specifically, the counterweight plate is positioned in between the first planetary-gear assembly **2** and the second planetary-gear assembly **3.** The counterweight plate is rotatably mounted to each of the plurality of secondary planet gears **6.** It is understood that the design, shape, weight, and material configuration of the eccentric annular external-counterweight **15** and the counterweight coupling plate **17** is subject to change.

Additionally, in the preferred embodiment of the present invention, the gear-pin assembly **20** further comprises a first counterweight plate **25** and a second counterweight plate **26.** The first counterweight plate **25** and the second counterweight plate **26** apply counterbalance to the shared rotational axis **19** where out-of-balance is created by the eccentrically positioned bearing journal shaft **21.** The first counterweight plate **25** and the second counterweight plate **26** are each a semi-circular plate. The first counterweight plate **25** is terminally connected to the first mounting foot **23,** opposite the bearing journal shaft **21.** Similarly, the second counterweight plate **26** is terminally connected to the second mounting foot **24,** opposite the bearing journal shaft **21.** This arrangement positions the journal bearing shaft **21** opposite to the first counterweight plate **25** and the second counterweight plate **26** across the shared rotation axis **19.**

Similar to traditional designs, referring to FIG. **3****,** the piston-and-connecting rod assembly **27** comprises a piston rod **28** and a piston **29.** The piston rod **28** attaches the journal bearing shaft **21** to the piston **29** in order to impart motion onto the bearing journal shaft **21.** The piston **29** controls and seals the internal volume within the cylinder **31** and in order to delineate the combustion chamber. The piston rod **28** is rotatably and terminally connected to the bearing journal shaft **21.** The piston **29** is positioned adjacent to the piston rod **28,** opposite the bearing journal shaft **21** with the piston **29** being rotatably being connected to the piston rod **28.** Resultantly, the piston **29** is able to slide along and within the cylinder **31** while the piston rod **28** rotates with the bearing journal shaft **21** in order to translate and transfer linear motion from the piston **29** to rotational motion to the mirror-image planetary-gear assembly **1.**

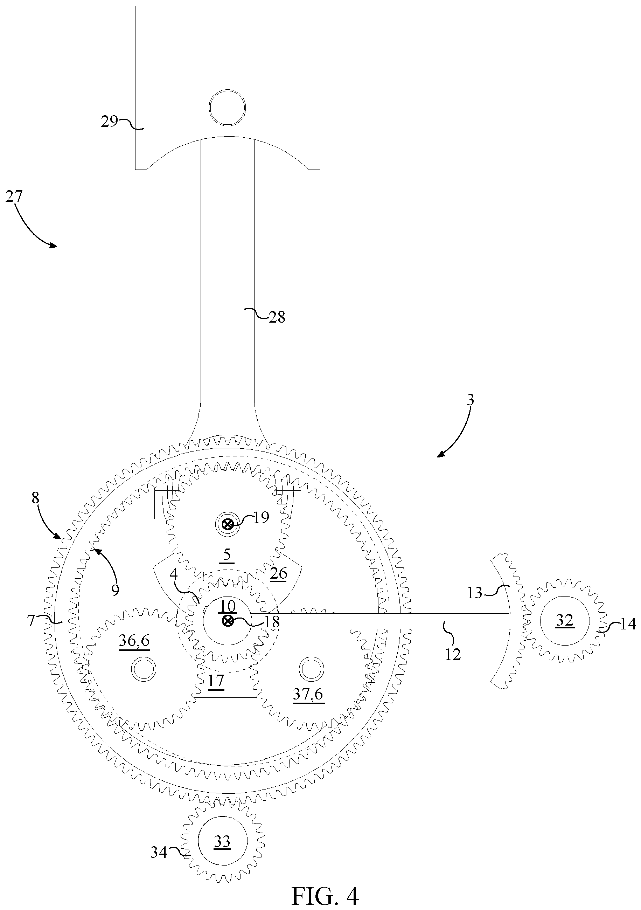

Referring to FIG. **4****,** the ring gear **7** may be coupled to the output power shaft **33** through a variety of means. In one embodiment, the ring gear **7** is coupled to the output power shaft **33** through a chain. In the preferred embodiment, the ring gear **7** is coupled to the output power shaft **33** through a gear mesh. More specifically, the ring gear **7** is an internal-external ring gear that comprises an external ring gear **8** and an internal ring gear **9.** The internal ring gear **9** meshes with and is designed complimentary to the primary planet gear **5** and each of the plurality of secondary planet gears **6.** More specifically, the primary planet gear **5** and each of the plurality of secondary planet gears **6** are mechanically engaged with the internal ring gear **9.** The first planetary-gear assembly **2** and the second planetary-gear assembly **3** each further comprise an output driven gear **34.** The output driven gear **34** is concentrically connected about the output power shaft **33** and is positioned coplanar with the internal-external ring gear. In order to transfer rotational energy/motion, the external ring gear **8** is mechanically engaged to the output driven gear **34.**

Referring to FIG. **5****,** the present invention may be integrated into a variety of different sized and differently configured internal combustion engines. Some examples include four-cylinder inline engine designs, six-cylinder inline or V engine designs, diesel-based engines, gasoline-based engines, and other traditional engines/designs. For embodiments with a plurality of cylinders, the present invention comprises a plurality of Internal Combustion (IC) mechanisms **35;** wherein each of the plurality of IC mechanisms **35** comprises the mirror-image planetary-gear assembly **1,** the gear-pin assembly **20,** the piston-and-connecting rod assembly **27.** For such instances, the plurality of IC mechanisms **35** is linearly distributed about the engine block **30** with each of the plurality of IC mechanisms **35** being rotatably mounted within the engine block **30** as described above. The piston **29** from the piston-and-connecting rod assembly **27** from each of the plurality of IC mechanisms **35** is slidably positioned within a corresponding cylinder **31** from the engine block **30.** Additionally, the ratio-control shaft **32** is mechanically coupled to each of the plurality of IC mechanisms **35.** Furthermore, the output power shaft **33** is mechanically coupled to each of the plurality of IC mechanisms **35** in order transfer the generated rotational motion by the plurality of IC mechanisms **35** out of the engine block **30,** preferably to a coupled transmission.

In one embodiment, the mirror-image planetary-gear assembly **1** utilizes a 1:2:5 tooth configuration in order to accomplish a two-long-stroke and two-short-stroke cycle, i.e. a four-stroke cycle. More specifically, a main tooth ratio between the sun gear **4,** the plurality of secondary planet gears **6** and the primary planet gear **5,** and the internal gear **8** is 1:2:5. In this embodiment one sun gear **4,** one primary planet gear **5,** two gears within the plurality of secondary planet gears **6,** and one ring gear **7** exist. Specifically, the plurality of secondary planet gears **6** comprises a first planet gear **36** and a second planet gear **37.** Wherein the first planet gear **36,** the second planet gear **37,** and the primary planet gear **5** are radially distributed about the sun gear **4.** Additionally, the first planet gear **36,** the second planet gear **37,** and the primary planet gear **5** are mechanically engaged in between the sun gear **4** and the ring gear **7.** The counterweight coupling plate **17** is rotatably mounted to the first planet gear and the second planet gear. At TDC height, the partial rotational movement of the sun gear **4** permits the compression ratio to vary typically between 8:1 and 37:1 by varying the degree of rotation of the sun gear **4** from 0 degrees to approximately 50 degrees. As mentioned above, the degree of rotation is directly dependent on the intake manifold pressure and the fuel being used.

The variable compression ratio-drive unit may be provided to partially rotate the variable compression ratio shaft **32,** rotates the variable compression drive gear **14,** engages the arc gear **13,** moves control arm **12,** rotates support shaft **10,** and ultimately rotates the sun gear **4** such that a predetermined controlled pressure at any TDC height can be maintained at time of ignition. This process is applicable to both the first planetary-gear assembly **2** and the second planetary-gear assembly **3.**

Referring to FIG. **4****,** this configuration allows for a longer power and exhaust strokes than the intake and compression strokes. More specifically, each time the primary planet gear **5** makes a single revolution about the sun gear **4** and the main rotational axis **18,** the primary planet gear **5** rotates one-half turn about the shared rotation axis **19.** The one-half turn performs two of the four strokes while the second revolution of the primary planet gear **5** around the sun gear **4** performs the remaining two strokes. The internal ring gear **9** contains five times the number of teeth than the sun gear **4** and the external ring gear **8** need not contain any specific number of teeth. However. since mathematically for the 1:2:5 main tooth ratio, the ring gear **7** rotates 1.2 times faster than the orbital speed of the primary planet gear **5,** the number of teeth on the external ring gear **8** can be arbitrarily set at 96 teeth. Therefore, to arbitrarily set the rotational speed of the output power shaft **33** to 3.2 times the orbital speed of the primary planet gear **5,** the speed of the output driven gear **34** would contain the same number of teeth as the primary planet gear 5 and each of the plurality of secondary planet gears **6.** The speed of the output power shaft **33** can be set to any rotational speed ratio but the intent of setting the ratio to be 3.2 times greater speed is to provide direct couple to an alternator at the front of the internal combustion engine and to provide power transmissions of much smaller size at the rear of the internal combustion engine.

One particular implementation includes setting the tooth number of the sun gear **4** to 18 teeth, the primary planet gear **5** and each of the secondary planet gears to 36 teeth, the internal ring gear **9** to 90 teeth, the external ring gear **8** to 96 teeth, and the output driven gear **34** to 36 teeth to yield rotational speed of the output power shaft **33** to 3.2 times the orbital speed of the primary planet gear **5.** Other settings may be used for the main tooth ratio may also be utilized.

In another embodiment, the mirror-image planetary-gear assembly **1** utilizes a 1:1:3 tooth configuration in order to accomplish variable compression ratio adjustment with single stroke length, two-stroke cycle operation. More specifically, the main tooth ratio between the sun gear **4,** the plurality of secondary planet gears **6** and the primary planet gear **5,** and the internal ring gear **9** is 1:1:3.

In one embodiment, the present invention may further comprise an at least one hydraulic clutch pack. The hydraulic clutch pack allows the present invention to engage or disengage one or more from the plurality of IC mechanisms **35.** The hydraulic clutch pack can be added to the external ring gear **8** of the first planetary-gear assembly **2** and the external ring gear **8** of the second planetary-gear assembly **3** from a specific IC mechanism from the plurality of IC mechanisms **35.** The hydraulic clutch pack can also be added to the output power shaft **33** between the driven output driven gear **34** to engage or disengage a specific IC mechanism from the plurality of IC mechanisms **35.** The hydraulic clutch pack is capable of stopping the movement of the piston-and-connecting rod assembly **27,** thus activating or deactivating the specific IC mechanism **35.**

Although the invention has been explained in relation to its preferred embodiment, it is to be understood that many other possible modifications and variations can be made without departing from the scope of the invention as hereinafter claimed.

## Claims

1. An engine, **characterized in that** the engine comprises:
a mirror-image planetary-gear assembly (1);
a gear-pin assembly (20);
a piston-and-connecting rod assembly (27);
the mirror-image planetary-gear assembly (1) comprises a first planetary-gear assembly (2) and a second planetary-gear assembly (3);
the first planetary-gear assembly (2) and the second planetary-gear assembly (3) each comprise a sun gear (4), a primary planet gear (5), a plurality of secondary planet gears (6), and a ring gear (7);
the first planetary-gear assembly (2) and the second planetary-gear assembly (3) being separate from each other;
the sun gear (4) from the first planetary-gear assembly (2) and the sun gear (4) from the second planetary-gear assembly (3) being concentrically positioned with each other about a main rotation axis (18);
the primary planet gear (5) from the first planetary-gear assembly (2) and the primary planet gear (5) from the second planetary-gear assembly (3) being concentrically positioned with each other along a shared rotation axis (19);
the gear-pin assembly (20) being connected in between the primary planet gear (5) from the first planetary-gear assembly (2) and the primary planet gear (5) from the second planetary-gear assembly (3); and
the piston-and-connecting rod assembly (27) being mechanically coupled to the gear-pin assembly (20).

2. The engine as claimed in claim 1 comprises:
the first planetary-gear assembly (2) and the second planetary-gear assembly (3) each further comprise a ratio-adjustment mounting shaft (10);
the ratio-adjustment mounting shaft (10) being positioned adjacent to the sun gear (4); and
the ratio-adjustment mounting shaft (10) being connected to the sun gear (4).

3. The engine as claimed in claim 2 comprises:
a ratio-control shaft (32);
the first planetary-gear assembly (2) and the second planetary-gear assembly (3) each further comprise a control arm (12), an arc gear (13), and a drive-adjustment gear (14);
the ratio-control shaft (32) being mounted parallel and offset to the ratio-adjustment mounting shaft (10);
the control arm (12) being connected to the ratio-adjustment mounting shaft (10);
the arc gear (13) being terminally connected to the control arm (12), opposite to the ratio-adjustment mounting shaft (10);
the drive-adjustment gear (14) being concentrically connected about the ratio-control shaft (32); and
the arc gear (13) being mechanically engaged with the drive-adjustment gear (14).

4. The engine as claimed in claim 2 comprises:
the first planetary-gear assembly (2) and the second planetary-gear assembly (3) each further comprise an eccentric annular external-counterweight (15);
the eccentric annular external-counterweight (15) being positioned adjacent to the primary planet gear (5) and the plurality of secondary planet gears (6);
the eccentric annular external-counterweight (15) being positioned around the ratio-adjustment mounting shaft (10);
the eccentric annular external-counterweight (15) being rotatably mounted to the primary planet gear (5) and each of the plurality of secondary planet gears (6); and
a center of gravity of the eccentric annular external-counterweight (15) and the shared rotation axis (19) being positioned opposite to each other about the ratio-adjustment mounting shaft (10).

5. The engine as claimed in claim 1 comprises:
an output power shaft (33);
an engine block (30);
the mirror-image planetary-gear assembly (1), the gear-pin assembly (20), and the piston-and-connecting rod assembly (27) being rotatably mounted within the engine block (30);
the output power shaft (33) being positioned parallel and offset to the main rotation axis (18);
the output power shaft (33) being rotatably mounted within the engine block (30);
the ring gear (7) from the first planetary-gear assembly (2) being torsionally coupled to the output power shaft (33);
the ring gear (7) from the second planetary-gear assembly (3) being torsionally coupled to the output power shaft (33); and
a piston (29) from the piston-and-connecting rod assembly (27) being slidably engaged with a cylinder (31) from the engine block (30).

6. The engine as claimed in claim 5 comprises:
the ring gear (7) of the first planetary-gear assembly (2) and the ring gear (7) of the second planetary-gear assembly (3) each being an internal-external ring gear;
the internal-external ring gear comprises an external ring gear (8) and an internal ring gear (9);
the first planetary-gear assembly (2) and the second planetary-gear assembly (3) each further comprises an output driven gear (34);
the output driven gear (34) being concentrically connected about the output power shaft (33);
the output driven gear (34) being positioned coplanar with the internal-external ring gear;
the external ring gear (8) being mechanically engaged to the output driven gear (34); and
the primary planet gear (5) and each of the plurality of secondary planet gears (6) being mechanically engaged to the internal ring gear (9).

7. The engine as claimed in claim 1 comprises:
the gear-pin assembly (20) comprises a bearing journal shaft (21), a first mounting foot (23), and a second mounting foot (24);
a central axis (22) of the bearing journal shaft (21) being positioned parallel and offset to the shared rotation axis (19);
the first mounting foot (23) and the second mounting foot (24) being positioned opposite to each other, across the bearing journal shaft (21);
the first mounting foot (23) being connected in between the bearing journal shaft (21) and the primary planet gear (5) of the first planetary-gear assembly (2); and
the second mounting foot (24) being connected in between the bearing journal shaft (21) and the primary planet gear (5) of the second planetary-gear assembly (3).

8. The engine as claimed in claim 7 comprises:
the gear-pin assembly (20) comprises a first counterweight plate (25) and a second counterweight plate (26);
the first counterweight plate (25) being terminally connected to the first mounting foot (23), opposite the bearing journal shaft (21); and
the second counterweight plate (26) being terminally connected to the second mounting foot (24), opposite the bearing journal shaft (21).

9. The engine as claimed in claim 1 comprises:
the piston-and-connecting rod assembly (27) comprises a piston rod (28) and a piston (29);
the piston rod (28) being rotatably and terminally connected to a bearing journal shaft (21) of the gear-pin assembly (20);
the piston (29) being positioned adjacent to the piston rod (28), opposite the bearing journal shaft (21); and
the piston (29) being rotatably connected to the piston rod (28).

10. The engine as claimed in claim 1 comprises:
the first planetary-gear assembly (2) and the second planetary-gear assembly (3) each further comprise a counterweight coupling plate (17);
the plurality of secondary planet gears (6) comprises a first planet gear (36) and a second planet gear (37);
the first planet gear (36), the second planet gear (37), and the primary planet gear (5) being radially distributed about the sun gear (4);
the first planet gear (36), the second planet gear (37), and the primary planet gear (5) being mechanically engaged in between the sun gear (4) and the ring gear (7);
the counterweight coupling plate (17) being positioned in between the first planetary-gear assembly (2) and the second planetary-gear assembly (3); and
the counterweight coupling plate (17) being rotatably mounted to the first planet gear (36) and the second planet gear (37).

11. The engine as claimed in claim 1 comprises:
an engine block (30);
a plurality of internal combustion (IC) mechanisms (35);
each of the plurality of IC mechanisms (35) comprises the mirror-image planetary-gear assembly (1), the gear-pin assembly (20), and the piston-and-connecting rod assembly (27);
the plurality of IC mechanisms (35) being linearly distributed along the engine block (30);
each of the plurality of IC mechanisms (35) being rotatably mounted within the engine block (30); and
a piston (29) from the piston-and-connecting rod assembly (27) from each of the plurality of IC mechanisms (35) being slidably positioned within a corresponding cylinder (31) from the engine block (30).

12. The engine as claimed in claim 1, wherein a main tooth ratio between the sun gear (4), the plurality of secondary planet gears (6) and the primary planet gear (5), and an internal ring gear of the ring gear (7) is 1:1:3.

13. The engine as claimed in claim 1, wherein a main tooth ratio between the sun gear (4), the plurality of secondary planet gears (6) and the primary planet gear (5), and the internal ring gear (9) of the ring gear (7) is 1:2:5.

## Patentansprüche

1. Motor, **dadurch gekennzeichnet, dass** der Motor Folgendes umfasst:
eine spiegelbildliche Planetengetriebeanordnung (1);
eine Zahnradstiftanordnung (20);
eine Kolben-Pleuel-Baugruppe (27);
die spiegelbildliche Planetengetriebebaugruppe (1) umfassend eine erste Planetengetriebebaugruppe (2) und eine zweite Planetengetriebebaugruppe (3);
die erste Planetengetriebebaugruppe (2) und die zweite Planetengetriebebaugruppe (3) jeweils umfassend ein Sonnenrad (4), ein primäres Planetenrad (5), mehrere sekundäre Planetenräder (6) und ein Hohlrad (7);
wobei die erste Planetengetriebebaugruppe (2) und die zweite Planetengetriebebaugruppe (3) voneinander getrennt sind;
das Sonnenrad (4) von der ersten Planetengetriebebaugruppe (2) und das Sonnenrad (4) von der zweiten Planetengetriebebaugruppe (3) konzentrisch zueinander um eine Hauptdrehachse (18) positioniert sind;
das primäre Planetenrad (5) von der ersten Planetengetriebebaugruppe (2) und das primäre Planetenrad (5) von der zweiten Planetengetriebebaugruppe (3) konzentrisch zueinander entlang einer gemeinsamen Rotationsachse (19) positioniert sind;
die Zahnradstiftanordnung (20) zwischen dem primären Planetenrad (5) von der ersten Planetengetriebebaugruppe (2) und dem primären Planetenrad (5) von der zweiten Planetengetriebebaugruppe (3) verbunden ist; und
die Kolben-Pleuel-Baugruppe (27) mechanisch mit der Zahnradstiftanordnung (20) gekoppelt ist.

2. Motor nach Anspruch 1 umfasst Folgendes:
die erste Planetengetriebebaugruppe (2) und die zweite Planetengetriebebaugruppe (3) jeweils ferner umfassend eine Übersetzungseinstell-Befestigungswelle (10);
wobei die Übersetzungseinstell-Befestigungswelle (10) neben dem Sonnenrad (4) positioniert ist; und
die Übersetzungseinstell-Befestigungswelle (10) mit dem Sonnenrad (4) verbunden ist.

3. Motor nach Anspruch 2 umfasst Folgendes:
eine Übersetzungssteuerwelle (32);
die erste Planetengetriebebaugruppe (2) und die zweite Planetengetriebebaugruppe (3) jeweils ferner umfassend einen Steuerarm (12), ein Bogenzahnrad (13) und ein Antriebseinstellrad (14);
wobei die Übersetzungssteuerwelle (32) parallel und versetzt zur Übersetzungseinstell-Befestigungswelle (10) montiert ist;
der Steuerarm (12) mit der Übersetzungseinstell-Befestigungswelle (10) verbunden ist;
das Bogenzahnrad (13) gegenüber der Übersetzungseinstell-Befestigungswelle (10) zur Einstellung des Übersetzungsverhältnisses endständig mit dem Steuerarm (12) verbunden ist;
das Antriebseinstellrad (14) konzentrisch um die Übersetzungssteuerwelle (32) verbunden ist; und
das Bogenzahnrad (13) mechanisch mit dem Antriebseinstellrad (14) in Eingriff steht.

4. Motor nach Anspruch 2 umfasst Folgendes:
die erste Planetengetriebebaugruppe (2) und die zweite Planetengetriebebaugruppe (3) jeweils ferner umfassend ein exzentrisches ringförmiges externes Gegengewicht (15);
wobei das exzentrische ringförmige externe Gegengewicht (15) neben dem primären Planetenrad (5) und den mehreren sekundären Planetenrädern (6) positioniert ist;
das exzentrische ringförmige externe Gegengewicht (15) um die Übersetzungseinstell-Befestigungswelle (10) positioniert ist;
das exzentrische ringförmige externe Gegengewicht (15) drehbar an dem primären Planetenrad (5) und jedem der mehreren sekundären Planetenräder (6) montiert ist; und
ein Schwerpunkt des exzentrischen ringförmigen Außengegengewichts (15) und die gemeinsame Rotationsachse (19) gegenüberliegend um die Übersetzungseinstell-Befestigungswelle (10) positioniert sind.

5. Motor nach Anspruch 1 umfasst Folgendes:
eine Ausgangsleistungswelle (33);
einen Motorblock (30);
wobei die spiegelbildliche Planetengetriebebaugruppe (1), die Zahnradstiftanordnung (20) und die Kolben-Pleuel-Baugruppe (27) drehbar in dem Motorblock (30) montiert sind;
die Ausgangsleistungswelle (33) parallel und versetzt zur Hauptdrehachse (18) positioniert ist;
die Ausgangsleistungswelle (33) drehbar in dem Motorblock (30) montiert ist;
das Hohlrad (7) von der ersten Planetengetriebebaugruppe (2) mit der Ausgangsleistungswelle (33) torsionsgekoppelt ist;
das Hohlrad (7) von der zweiten Planetengetriebebaugruppe (3) mit der Ausgangsleistungswelle (33) torsionsgekoppelt ist; und
ein Kolben (29) von der Kolben-Pleuel-Baugruppe (27) verschiebbar mit einem Zylinder (31) vom Motorblock (30) in Eingriff steht.

6. Motor nach Anspruch 5 umfasst Folgendes:
dass das Hohlrad (7) der ersten Planetengetriebebaugruppe (2) und das Hohlrad (7) der zweiten Planetengetriebebaugruppe (3) jeweils ein Intern-Extern-Hohlrad sind;
das Intern-Extern-Hohlrad ein externes Hohlrad (8) und ein internes Hohlrad (9) umfasst;
die erste Planetengetriebebaugruppe (2) und die zweite Planetengetriebebaugruppe (3) jeweils ferner ein abtriebsgetriebenes Zahnrad (34) umfassen;
das abtriebsgetriebene Zahnrad (34) konzentrisch um die Ausgangsleistungswelle (33) verbunden ist;
das abtriebsgetriebene Zahnrad (34) koplanar mit dem Intern-Extern-Hohlrad positioniert ist;
wobei das externe Hohlrad (8) mechanisch mit dem abtriebsgetriebenen Zahnrad (34) in Eingriff steht; und
das primäre Planetenrad (5) und jedes der mehreren sekundären Planetenräder (6) mechanisch mit dem internen Hohlrad (9) verbunden sind.

7. Motor nach Anspruch 1 umfasst Folgendes:
die Zahnstiftanordnung (20) umfassend eine Lagerzapfenwelle (21), einen ersten Montagefuß (23) und einen zweiten Montagefuß (24);
eine Mittelachse (22) der Lagerzapfenwelle (21), die parallel und versetzt zur gemeinsamen Rotationsachse (19) positioniert ist;
wobei der erste Montagefuß (23) und der zweite Montagefuß (24) einander gegenüberliegend über der Lagerzapfenwelle (21) positioniert sind;
wobei der erste Montagefuß (23) zwischen der Lagerzapfenwelle (21) und dem primären Planetenrad (5) der ersten Planetengetriebebaugruppe (2) verbunden ist; und
der zweite Montagefuß (24) zwischen der Lagerzapfenwelle (21) und dem primären Planetenrad (5) der zweiten Planetengetriebebaugruppe (3) verbunden ist.

8. Motor nach Anspruch 7 umfasst Folgendes:
die Zahnradstiftanordnung (20) umfassend eine erste Gegengewichtsplatte (25) und eine zweite Gegengewichtsplatte (26);
wobei die erste Gegengewichtsplatte (25) gegenüber der Lagerzapfenwelle (21) endständig mit dem ersten Montagefuß (23) verbunden ist; und
die zweite Gegengewichtsplatte (26) gegenüber der Lagerzapfenwelle (21) endständig mit dem zweiten Montagefuß (24) verbunden ist.

9. Motor nach Anspruch 1 umfasst Folgendes:
die Kolben-Pleuel-Baugruppe (27) umfassend eine Kolbenstange (28) und einen Kolben (29);
wobei die Kolbenstange (28) drehbar und endständig mit einer Lagerzapfenwelle (21) der Zahnradstiftanordnung (20) verbunden ist;
der Kolben (29) neben der Kolbenstange (28) gegenüber der Lagerzapfenwelle (21) positioniert ist; und
der Kolben (29) drehbar mit der Kolbenstange (28) verbunden ist.

10. Motor nach Anspruch 1 umfasst Folgendes:
die erste Planetengetriebebaugruppe (2) und die zweite Planetengetriebebaugruppe (3) ferner jeweils umfassend eine Gegengewichtskupplungsplatte (17);
die mehreren sekundären Planetenräder (6) umfassend ein erstes Planetenrad (36) und ein zweites Planetenrad (37);
wobei das erste Planetenrad (36), das zweite Planetenrad (37) und das primäre Planetenrad (5) radial um das Sonnenrad (4) verteilt sind;
das erste Planetenrad (36), das zweite Planetenrad (37) und das primäre Planetenrad (5) mechanisch zwischen dem Sonnenrad (4) und dem Hohlrad (7) in Eingriff stehen;
die Gegengewichtskupplungsplatte (17) zwischen der ersten Planetengetriebebaugruppe (2) und der zweiten Planetengetriebebaugruppe (3) positioniert ist; und
die Gegengewichtskupplungsplatte (17) drehbar am ersten Planetenrad (36) und am zweiten Planetenrad (37) montiert ist.

11. Motor nach Anspruch 1 umfasst Folgendes:
einen Motorblock (30);
eine Vielzahl von Verbrennung (IC)-Mechanismen (35);
jeder der mehreren IC-Mechanismen (35) umfassend die spiegelbildliche Planetengetriebebaugruppe (1), die Zahnradstiftanordnung (20) und die Kolben-Pleuel-Baugruppe (27);
wobei mehrere IC-Mechanismen (35) linear entlang des Motorblocks (30) verteilt sind;
jeder der mehreren IC-Mechanismen (35) drehbar in dem Motorblock (30) montiert ist; und
ein Kolben (29) von der Kolben-Pleuel-Baugruppe (27) von jedem der mehreren IC-Mechanismen (35) verschiebbar in einem entsprechenden Zylinder (31) vom Motorblock (30) positioniert ist.

12. Motor nach Anspruch 1, wobei ein Hauptzahnverhältnis zwischen dem Sonnenrad (4), der Vielzahl von sekundären Planetenrädern (6) und dem primären Planetenrad (5) und einem internen Hohlrad des Hohlrads (7) 1:1:3 ist.

13. Motor nach Anspruch 1, wobei ein Hauptzahnverhältnis zwischen dem Sonnenrad (4), der Vielzahl von sekundären Planetenrädern (6) und dem primären Planetenrad (5) und dem internen Hohlrad des Hohlrads (7) 1:2:5 ist.

## Revendications

1. Moteur, **caractérisé en ce que** le moteur comprend :
un ensemble engrenage planétaire à image miroir (1) ;
un ensemble axe d'engrenage (20) ;
un ensemble piston et bielle (27) ;
l'ensemble engrenage planétaire à image miroir (1) comprend un premier ensemble engrenage planétaire (2) et un second ensemble engrenage planétaire (3) ;
le premier ensemble engrenage planétaire (2) et le second ensemble engrenage planétaire (3) comprennent chacun un engrenage solaire (4), un engrenage planétaire primaire (5), une pluralité d'engrenages planétaires secondaires (6) et un engrenage annulaire (7) ;
le premier ensemble engrenage planétaire (2) et le second ensemble engrenage planétaire (3) étant séparés l'un de l'autre ;
l'engrenage solaire (4) du premier ensemble engrenage planétaire (2) et l'engrenage solaire (4) du second ensemble engrenage planétaire (3) étant positionnés concentriquement l'un par rapport à l'autre autour d'un axe de rotation principal (18) ;
l'engrenage planétaire primaire (5) du premier ensemble engrenage planétaire (2) et l'engrenage planétaire primaire (5) du second ensemble engrenage planétaire (3) étant positionnés concentriquement l'un par rapport à l'autre le long d'un axe de rotation partagé (19) ;
l'ensemble axe d'engrenage (20) étant relié entre l'engrenage planétaire primaire (5) du premier ensemble engrenage planétaire (2) et l'engrenage planétaire primaire (5) du second ensemble engrenage planétaire (3) ; et
l'ensemble piston et bielle (27) étant couplé mécaniquement à l'ensemble axe d'engrenage (20).

2. Moteur selon la revendication 1, comprenant :
le premier ensemble engrenage planétaire (2) et le second ensemble engrenage planétaire (3) comprenant en outre chacun un arbre de montage de réglage de rapport (10) ;
l'arbre de montage de réglage de rapport (10) étant positionné de manière adjacente à l'engrenage solaire (4) ; et
l'arbre de montage de réglage de rapport (10) étant relié à l'engrenage solaire (4).

3. Moteur selon la revendication 2, comprenant :
un arbre de commande de rapport (32) ;
le premier ensemble engrenage planétaire (2) et le second ensemble engrenage planétaire (3) comprenant en outre chacun un bras de commande (12), un engrenage en arc (13) et un engrenage de réglage d'entraînement (14) ;
l'arbre de commande de rapport (32) étant monté parallèlement et décalé par rapport à l'arbre de montage de réglage de rapport (10) ;
le bras de commande (12) étant relié à l'arbre de montage de réglage de rapport (10) ;
l'engrenage en arc (13) étant relié de manière terminale au bras de commande (12), en face de l'arbre de montage de réglage de rapport (10) ;
l'engrenage de réglage d'entraînement (14) étant relié concentriquement autour de l'arbre de commande de rapport (32) ; et
l'engrenage en arc (13) étant mécaniquement en prise avec l'engrenage de réglage d'entraînement (14).

4. Moteur selon la revendication 2, comprenant :
le premier ensemble engrenage planétaire (2) et le second ensemble engrenage planétaire (3) comprenant en outre chacun un contrepoids externe annulaire excentrique (15) ;
le contrepoids externe annulaire excentrique (15) étant positionné de manière adjacente à l'engrenage planétaire primaire (5) et à la pluralité d'engrenages planétaires secondaires (6) ;
le contrepoids externe annulaire excentrique (15) étant positionné autour de l'arbre de montage de réglage de rapport (10) ;
le contrepoids externe annulaire excentrique (15) étant monté de manière rotative sur l'engrenage planétaire primaire (5) et sur chacun de la pluralité d'engrenages planétaires secondaires (6) ; et
un centre de gravité du contrepoids externe annulaire excentrique (15) et l'axe de rotation partagé (19) étant positionnés en face l'un de l'autre autour de l'arbre de montage de réglage de rapport (10).

5. Moteur selon la revendication 1, comprenant :
un arbre de transmission de sortie (33) ;
un bloc moteur (30) ;
l'ensemble engrenage planétaire à image miroir (1), l'ensemble axe d'engrenage (20) et l'ensemble piston et bielle (27) étant montés de manière rotative à l'intérieur du bloc moteur (30) ;
l'arbre de transmission de sortie (33) étant positionné parallèlement et décalé par rapport à l'axe de rotation principal (18) ;
l'arbre de transmission de sortie (33) étant monté de manière rotative à l'intérieur du bloc moteur (30) ;
l'engrenage annulaire (7) du premier ensemble engrenage planétaire (2) étant couplé en torsion à l'arbre de transmission de sortie (33) ;
l'engrenage annulaire (7) du second ensemble engrenage planétaire (3) étant couplé en torsion à l'arbre de transmission de sortie (33) ; et
un piston (29) de l'ensemble piston et bielle (27) étant en prise de manière coulissante avec un cylindre (31) du bloc moteur (30).

6. Moteur selon la revendication 5, comprenant :
l'engrenage annulaire (7) du premier ensemble engrenage planétaire (2) et l'engrenage annulaire (7) du second ensemble engrenage planétaire (3) étant chacun un engrenage annulaire interne-externe ;
l'engrenage annulaire interne-externe comprenant un engrenage annulaire externe (8) et un engrenage annulaire interne (9) ;
le premier ensemble engrenage planétaire (2) et le second ensemble engrenage planétaire (3) comprenant en outre chacun un engrenage entraîné en sortie (34) ;
l'engrenage entraîné en sortie (34) étant relié concentriquement autour de l'arbre de transmission de sortie (33) ;
l'engrenage entraîné en sortie (34) étant positionné de manière coplanaire avec l'engrenage annulaire interne-externe ;
l'engrenage annulaire externe (8) étant mécaniquement en prise avec l'engrenage entraîné en sortie (34) ; et
l'engrenage planétaire primaire (5) et chacun de la pluralité d'engrenages planétaires secondaires (6) étant mécaniquement en prise avec l'engrenage annulaire interne (9).

7. Moteur selon la revendication 1, comprenant :
l'ensemble axe d'engrenage (20) comprenant un arbre à palier lisse (21), un premier pied de montage (23) et un second pied de montage (24) ;
un axe central (22) de l'arbre à palier lisse (21) étant positionné parallèlement et décalé par rapport à l'axe de rotation partagé (19) ;
le premier pied de montage (23) et le second pied de montage (24) étant positionnés en face l'un de l'autre, à travers l'arbre à palier lisse (21) ;
le premier pied de montage (23) étant relié entre l'arbre à palier lisse (21) et l'engrenage planétaire primaire (5) du premier ensemble engrenage planétaire (2) ; et
le second pied de montage (24) étant relié entre l'arbre à palier lisse (21) et l'engrenage planétaire primaire (5) du second ensemble engrenage planétaire (3).

8. Moteur selon la revendication 7, comprenant :
l'ensemble axe d'engrenage (20) comprenant une première plaque de contrepoids (25) et une seconde plaque de contrepoids (26) ;
la première plaque de contrepoids (25) étant reliée de manière terminale au premier pied de montage (23), en face de l'arbre à palier lisse (21) ; et
la seconde plaque de contrepoids (26) étant reliée de manière terminale au second pied de montage (24), en face de l'arbre à palier lisse (21).

9. Moteur selon la revendication 1, comprenant :
l'ensemble piston et bielle (27) comprenant une tige de piston (28) et un piston (29) ;
la tige de piston (28) étant reliée de manière rotative et terminale à un arbre à palier lisse (21) de l'ensemble axe d'engrenage (20) ;
le piston (29) étant positionné de manière adjacente à la tige de piston (28), en face de l'arbre à palier lisse (21) ; et
le piston (29) étant relié de manière rotative à la tige de piston (28).

10. Moteur selon la revendication 1, comprenant :
le premier ensemble engrenage planétaire (2) et le second ensemble engrenage planétaire (3) comprenant en outre chacun une plaque d'accouplement de contrepoids (17) ;
la pluralité d'engrenages planétaires secondaires (6) comprenant un premier engrenage planétaire (36) et un second engrenage planétaire (37) ;
le premier engrenage planétaire (36), le second engrenage planétaire (37) et l'engrenage planétaire primaire (5) étant répartis radialement autour de l'engrenage solaire (4) ;
le premier engrenage planétaire (36), le second engrenage planétaire (37) et l'engrenage planétaire primaire (5) étant mécaniquement en prise entre l'engrenage solaire (4) et l'engrenage annulaire (7) ;
la plaque d'accouplement de contrepoids (17) étant positionnée entre le premier ensemble engrenage planétaire (2) et le second ensemble engrenage planétaire (3) ; et
la plaque d'accouplement de contrepoids (17) étant montée de manière rotative sur le premier engrenage planétaire (36) et le second engrenage planétaire (37).

11. Moteur selon la revendication 1, comprenant :
un bloc moteur (30) ;
une pluralité de mécanismes de combustion interne (IC) (35) ;
chacun de la pluralité de mécanismes IC (35) comprenant l'ensemble engrenage planétaire à image miroir (1), l'ensemble axe d'engrenage (20) et l'ensemble piston et bielle (27) ;
la pluralité de mécanismes IC (35) étant répartis de manière linéaire le long du bloc moteur (30) ;
chacun de la pluralité de mécanismes IC (35) étant monté de manière rotative à l'intérieur du bloc moteur (30) ; et
un piston (29) de l'ensemble piston et bielle (27) de chacun de la pluralité de mécanismes IC (35) étant positionné de manière coulissante à l'intérieur d'un cylindre (31) correspondant du bloc moteur (30).

12. Moteur selon la revendication 1, dans lequel un rapport de dents principal entre l'engrenage solaire (4), la pluralité d'engrenages planétaires secondaires (6) et l'engrenage planétaire primaire (5), et un engrenage annulaire interne de l'engrenage annulaire (7) est de 1:1:3.

13. Moteur selon la revendication 1, dans lequel un rapport de dents principal entre l'engrenage solaire (4), la pluralité d'engrenages planétaires secondaires (6) et l'engrenage planétaire primaire (5), et l'engrenage annulaire interne (9) de l'engrenage annulaire (7) est de 1:2:5.
